(19) Europäisches Patentamt
European Patent Office
Office européen des brevets

(11) **EP 3 388 975 B1**

(12) **FASCICULE DE BREVET EUROPEEN**

(45) Date de publication et mention
de la délivrance du brevet:
**06.08.2025 Bulletin 2025/32**

(21) Numéro de dépôt: **18166584.5**

(22) Date de dépôt: **10.04.2018**

(51) Classification Internationale des Brevets (IPC):
***G06V 40/13*** *(2022.01)*

(52) Classification Coopérative des Brevets (CPC):
**G06V 40/1394; G06V 40/1318**

(54) **DISPOSITIF DE CAPTURE D'UNE EMPREINTE D'UNE PARTIE CORPORELLE**

SENSORVORRICHTUNG ZUR AUFNAHME EINES ABDRUCKS EINES KÖRPERTEILS

DEVICE FOR CAPTURING AN IMPRESSION OF A BODY PART

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.04.2017 FR 1753179**

(43) Date de publication de la demande:
**17.10.2018 Bulletin 2018/42**

(73) Titulaires:
• **Idemia Identity & Security France**
**92400 Courbevoie (FR)**
• **Commissariat à l'Energie Atomique et aux Energies**
**Alternatives**
**75015 Paris (FR)**

(72) Inventeurs:
• FOURRE, Joël-Yann
**92130 Issy Les Moulineaux (FR)**
• MAINGUET, Jean-François
**38100 Grenoble (FR)**

(74) Mandataire: **Cabinet Le Guen Maillet**
**3, impasse de la Vigie**
**CS 71840**
**35418 Saint-Malo Cedex (FR)**

(56) Documents cités:
WO-A1-2016/205832    US-A1- 2017 017 824
US-A1- 2017 221 960

• DAVIDE MALTONI: "Handbook of Fingerprint Recognition 2nd ed.", 1 January 2009, SPRINGER, pages: 58 - 95, XP055342000

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention concerne un dispositif de capture d'une empreinte d'une partie corporelle. Elle trouve application dans le domaine de la reconnaissance des empreintes digitales.

## Contexte de l'invention

L'utilisation d'empreintes digitales, par exemple du type empreinte d'un doigt, d'une pluralité de doigts, d'une paume de main, permet de sécuriser des accès à des bâtiments ou à des machines. Une telle technologie permet de s'affranchir de codes d'accès ou de cartes qui peuvent être prêtés, volés ou falsifiés. L'utilisation de cette technologie permet de renforcer la sécurité dans la mesure où la probabilité que deux personnes aient deux empreintes digitales identiques est quasiment nulle.

Un dispositif de capture d'une empreinte digitale permet de capturer une image d'une empreinte digitale. Dans le cas d'une identification, cette empreinte est comparée avec un ensemble d'empreintes digitales de référence contenues dans une base de données. Dans le cas d'une authentification, cette empreinte est comparée à une seule empreinte digitale. La comparaison permet de déterminer si l'empreinte digitale capturée appartient ou non à une personne référencée dans la base de données ou si la personne est bien celle qu'elle prétend être.

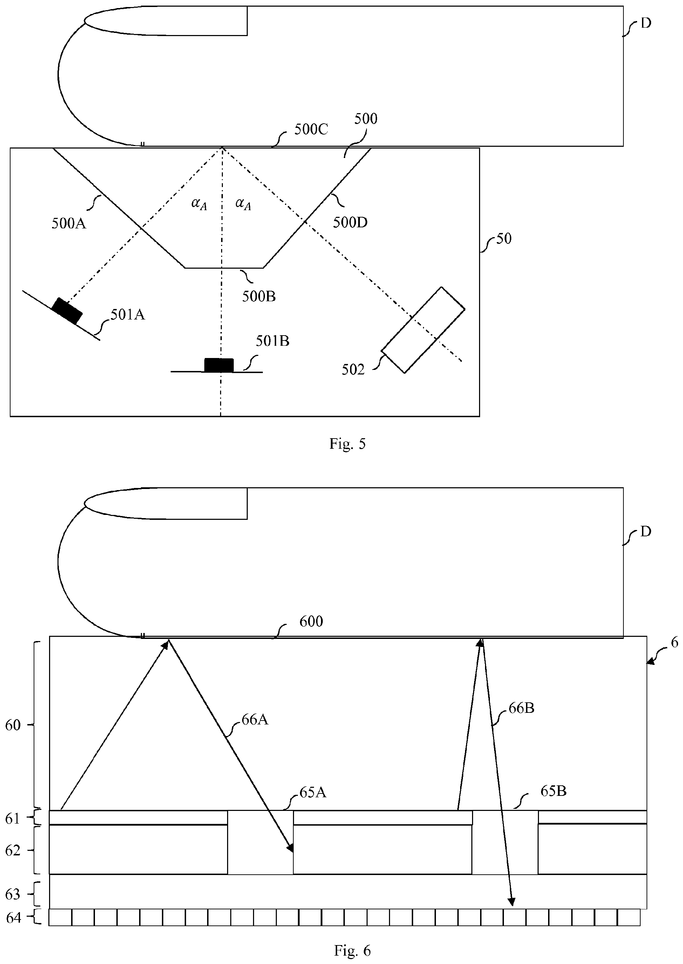

La Fig. 5 décrit schématiquement un dispositif de capture d'une empreinte digitale travaillant en réflexion totale et pouvant fonctionner en fond clair ou en fond sombre.

Le dispositif 50 décrit en Fig. 5 comprend un prisme 500, deux sources lumineuses 501A et 501B, et un système optique 502 tel que par exemple un capteur CCD (Dispositif à transfert de charges, « Charge-Coupled Device ») ou CMOS (« Complementary Metal Oxide Semiconductor » en terminologie anglo-saxonne) et une ou plusieurs lentilles.

La source lumineuse 501A génère un faisceau lumineux qui traverse une première face 500A du prisme 500 jusqu'à une deuxième face 500C du prisme 500 où est positionnée la partie du corps (ici un doigt D) portant l'empreinte digitale. L'empreinte est constituée de vallées et de crêtes. Le faisceau lumineux généré par la source lumineuse 501A forme un angle incident $\alpha_A$ avec la normale à la face 500C. L'angle $\alpha_A$ est supérieur à un angle critique $\theta_c$ et inférieur à un angle limite $\theta_l$.

La face 500C sépare un premier milieu correspondant au prisme 500 d'un deuxième milieu correspondant à l'air ou au doigt D. L'angle critique $\theta_c$ (resp. l'angle limite $\theta_l$) est défini comme l'angle au-delà duquel la réflexion totale se produit lorsqu'un faisceau atteint la face 500C quand le deuxième milieu est l'air (resp. quand le deuxième milieu est le doigt D).

Quand le doigt D est posé sur la face 500C, le faisceau lumineux généré par la source 501A subit une réflexion totale lorsque, à la position frappée par le faisceau lumineux sur la face 500C, le doigt forme une vallée, *i.e.* il y a de l'air entre la face 500C et le doigt D. Lorsque, à la position frappée par le faisceau lumineux sur la face 500C, le doigt forme une crête, *i.e.* la peau du doigt est en contact direct avec la face 500C, il n'y a pas réflexion totale. La réflexion totale est alors dite frustrée et le faisceau lumineux est diffusé dans le doigt D.

Après réflexion sur la face 500C, le faisceau lumineux traverse la quatrième face 500D et atteint le système optique 502. Le système optique 502 forme alors une image de l'empreinte digitale à fort contraste entre les vallées et les crêtes. Les vallées correspondent à des faisceaux totalement réfléchis par la face 500C et apparaissent donc très lumineuses dans l'image. Les crêtes correspondent à des faisceaux lumineux diffusés, en partie absorbés dans le doigt D et qui sont ressortis du doigt pour atteindre le système optique 502. Les crêtes apparaissent donc plus sombres dans l'image.

Le système optique 502 reçoit donc à la fois des faisceaux lumineux réfléchis par la face 500C et diffusés dans le doigt D. Le dispositif formé de la source 501A, du prisme 500 et du système optique 502 est un dispositif utilisant le principe de réflexion totale à fond clair. On peut trouver un dispositif similaire dans le brevet américain US3200701.

La source lumineuse 501B génère un faisceau lumineux qui traverse une troisième face 500B du prisme 500 jusqu'à la deuxième face 500C où est positionné le doigt D. Le faisceau lumineux généré par la source lumineuse 501B forme un angle incident $\alpha_B$ avec la normale à la face 500C inférieur à l'angle critique $\theta_c$ (ici, l'angle incident $\alpha_B$ est de zéro degré). Le faisceau lumineux généré par la source 501B n'est donc pas réfléchi totalement par la face 500B.

Le système optique 502 reçoit le faisceau lumineux généré par la source 501B après diffusion par le doigt D. Le système optique 502 est configuré de sorte à recevoir des faisceaux lumineux après diffusion dans le doigt D formant un angle compris entre l'angle critique $\theta_c$ et l'angle limite $\theta_l$ avec la normale à la face 500C. Le système optique 502 ne reçoit donc que des faisceaux lumineux résultant d'une diffusion dans le doigt D mais aucun faisceau lumineux résultant d'une réflexion sur la face supérieure 500C. Là encore, le système optique 502 forme une image de l'empreinte digitale à fort contraste entre les vallées et les crêtes. Les crêtes correspondent à des faisceaux lumineux diffusés, en partie absorbés dans le doigt D et qui sont ressortis du doigt au niveau des crêtes en contact avec la face 500B pour atteindre le système optique 502. Aucun faisceau lumineux diffusé dans le doigt D et ressortant du doigt D au niveau des vallées ne peut atteindre le système optique 502 car ils ne peuvent traverser la couche d'air et ensuite se propager dans le prisme 500 tout en formant un angle par rapport à la normale à la face 500B supérieur à l'angle critique $\theta_c$. Les crêtes apparaissent donc plus lumineuses dans l'image d'empreinte que les vallées. Le dispositif formé de la source 501B, du prisme 500 et du système optique 502 est un dispositif utilisant le principe de réflexion totale à fond sombre. On peut trouver un dispositif similaire dans le brevet français FR2757974.

L'angle critique $\theta_c$ est donné par la formule suivante :

$$\theta_c = arcsin\left(\frac{n_0}{n_1}\right)$$

$n_1$ étant l'indice de réfraction du prisme et $n_0$ étant l'indice de réfraction de l'air ou du doigt. Pour un indice de réfraction de l'air égal à « 1 » et un indice de réfraction du prisme égal à « 1.5 », on obtient un angle critique $\theta_c$ = 41.8 degrés. L'indice de réfraction de la peau est, dans le domaine du visible, compris entre « 1.41 » et « 1.47 ». En considérant la valeur minimale de « 1.41 », on obtient donc un angle limite $\theta_l$ de « 70 » degrés. En considérant la valeur maximale, on obtient un angle $\theta_l^{max}$ de « 76 » degrés.

Les dispositifs de capture d'une empreinte biométrique travaillant en réflexion totale à fond clair ont pour inconvénient connu d'être sensibles aux défauts que pourrait comporter la face sur laquelle repose le doigt (ici la face 500C) : rayures, salissures, etc. En effet, ces défauts modifient localement les propriétés de réflexion de la face 500C (qui n'est alors plus une réflexion totale) en créant un peu d'absorption ou de diffusion.

On connaît un dispositif de capture d'une empreinte digitale décrit dans la demande de brevet US20170017824 compatible avec des équipements portatifs car plus compact.

La Fig. 6 décrit schématiquement un tel dispositif de capture d'une empreinte digitale compact. Ce dispositif 6 comprend une première lame transparente 60 comprenant une face 600 sur laquelle peut reposer la partie du corps (ici le doigt D) portant l'empreinte digitale. En dessous de la lame transparente 60 se trouve une source lumineuse 61 formée d'une couche mince de DEL organique (Diode ElectroLuminescente organiques : « Organic Light-Emitting Diode (OLED) » en terminologie anglo-saxonne). Par la suite nous utilisons le terme DEL pour désigner indifféremment des diodes électroluminescentes et des diodes électroluminescentes organiques. En dessous de la source lumineuse 61 se trouve une couche de collimation 62 sous forme d'une lame plus ou moins opaque comprenant des trous (« pinhole » en terminologie anglo-saxonne) en général de forme circulaire répartis régulièrement sur la lame. Deux trous 65A et 65B traversant la couche mince de DEL 61 et la couche de collimation 62 sont représentés. La couche de collimation 62 est suivie d'une deuxième lame transparente 63, d'épaisseur inférieure à l'épaisseur de la lame de verre 60. En dessous de la lame transparente 63 se trouve un capteur 64 sensible à la lumière émise par la source lumineuse 61 tel qu'un capteur CCD ou CMOS.

Dans le dispositif décrit en relation avec la Fig. 6, la forme de trous (i.e. hauteur, diamètre) est d'une importance capitale. En effet, dans ce dispositif, seuls des faisceaux lumineux ayant un angle d'incidence sur la face 600 proche de « 0 degré » par rapport à la normale à la face 600 (tel que le faisceau 66B) peuvent traverser la couche de collimation. Des faisceaux lumineux ayant un angle d'incidence plus important (tel que le faisceau 66A) doivent être bloqués par la couche de collimation 62. En effet, il est essentiel dans ce dispositif que les images formées en regard de chaque trou soient disjointes sur le capteur 64 sans quoi les zones de recouvrement apparaîtraient floues. Toutefois, en empêchant les faisceaux lumineux ayant un angle d'incidence important d'atteindre le capteur 64, on s'empêche de tirer profit de la réflexion totale, en particulier les faisceaux lumineux après diffusion dans le doigt D formant un angle compris entre l'angle critique $\theta_c$ et l'angle limite $\theta_l$ avec la normale à la face 600, ce qui empêche d'obtenir une image à fort contraste entre les vallées et les crêtes d'une empreinte digitale.

Il est souhaitable de pallier ces inconvénients de l'état de la technique. Il est notamment souhaitable de proposer un dispositif de capture d'une empreinte digitale qui soit à la fois compact et qui fonctionne en réflexion totale. Il est souhaitable que ce dispositif soit peu ou pas sensible aux éventuels défauts de la surface sur laquelle repose la partie corporelle à imager.

**EXPOSE DE L'INVENTION**

L'invention est définie par un dispositif selon la revendication 1 et par un procédé selon la revendication 15.

**BREVE DESCRIPTION DES DESSINS**

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un équipement comprenant un dispositif de capture d'une empreinte d'une partie corporelle selon l'invention ;
- la Fig. 2 illustre schématiquement un premier mode de réalisation d'un dispositif de capture d'une empreinte d'une partie corporelle selon l'invention;
- la Fig. 3 illustre schématiquement une sous-partie vue de face d'un capteur sensible à la lumière adapté pour le premier mode de réalisation du dispositif de capture d'une empreinte d'une partie corporelle;
- la Fig. 4A illustre schématiquement un deuxième mode de réalisation du dispositif de capture d'une empreinte d'une partie corporelle selon l'invention ;
- la Fig. 4B illustre schématiquement un fonctionnement du deuxième mode de réalisation du dispositif de capture d'une empreinte d'une partie corporelle selon l'invention ;

- la Fig. 4C illustre schématiquement une sous-partie vue de face d'un premier exemple de capteur adapté au deuxième mode de réalisation du dispositif de capture d'une empreinte d'une partie corporelle selon l'invention ;
- la Fig. 4D illustre schématiquement une sous-partie vue de face d'un deuxième exemple de capteur adapté au deuxième mode de réalisation du dispositif de capture d'une empreinte d'une partie corporelle selon l'invention ;
- la Fig. 4E illustre schématiquement une sous-partie vue de face d'un troisième exemple de capteur adapté au deuxième mode de réalisation du dispositif de capture d'une empreinte d'une partie corporelle selon l'invention ;
- la Fig. 5 décrit schématiquement un dispositif de capture d'une empreinte digitale de l'art antérieur travaillant en réflexion totale et pouvant fonctionner en fond clair ou en fond sombre ;
- la Fig. 6 illustre schématiquement un dispositif compact de capture d'une empreinte d'une partie corporelle de l'art antérieur ;
- les Figs. 7A et 7B décrivent de manière détaillée une mise en œuvre particulière du premier mode de réalisation du dispositif de capture d'une empreinte d'une partie corporelle dans laquelle une source lumineuse est intégrée sur une face inférieure d'une première lame sur laquelle peut reposer une partie corporelle ;

la Fig. 8 illustre schématiquement un procédé de détection de fraude utilisant le dispositif selon l'invention ; et,

- la Fig. 9 illustre schématiquement un exemple d'architecture matérielle d'un module de traitement mettant en œuvre le procédé de détection de fraude.

## DESCRIPTION DETAILLEE DE DIVERS MODES DE REALISATION

La description qui suit détaille plus particulièrement des modes de réalisation de la présente invention dans un contexte de téléphone intelligent (« smartphone » en terminologie anglo-saxonne). L'invention peut s'appliquer à d'autres équipements pouvant comprendre un dispositif de capture d'une empreinte d'une partie corporelle tel qu'un ordinateur, une tablette, etc. Par ailleurs, l'invention est décrite dans un contexte où la partie corporelle est un doigt. Elle s'applique toutefois à d'autres parties corporelles telles que plusieurs doigts, une paume de main, etc.

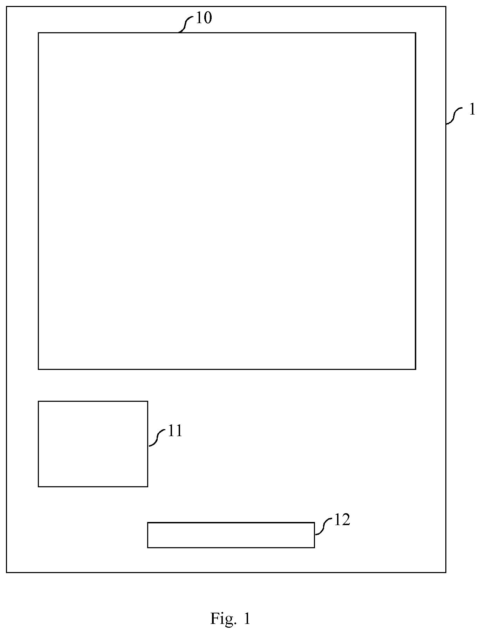

La **Fig. 1** illustre schématiquement un équipement comprenant un dispositif de capture d'une empreinte d'une partie corporelle selon l'invention.

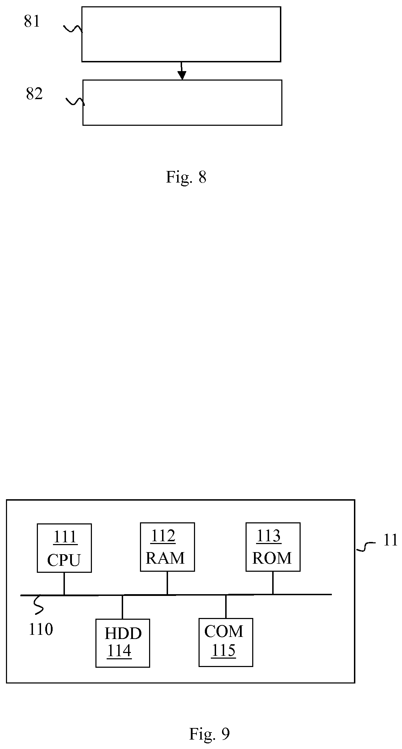

L'équipement 1 est ici un téléphone intelligent comprenant un écran 10, un module de traitement 11 et un dispositif de capture d'une empreinte d'une partie corporelle 12. Nous appelons par la suite le dispositif de capture d'une empreinte d'une partie corporelle *dispositif biométrique.* Le module de traitement 11, que nous décrivons par la suite en relation avec la Fig. 9, peut mettre en œuvre plusieurs fonctionnalités de l'équipement 1 comprenant notamment des traitements des données issues du dispositif biométrique 12. Le dispositif biométrique 12 est par exemple utilisé par un propriétaire de l'équipement 1 pour s'authentifier auprès de l'équipement 1 et ainsi pouvoir l'utiliser.

Dans une mise en œuvre particulière, le dispositif de capture d'une empreinte d'une partie corporelle 12 est intégré dans l'écran 10.

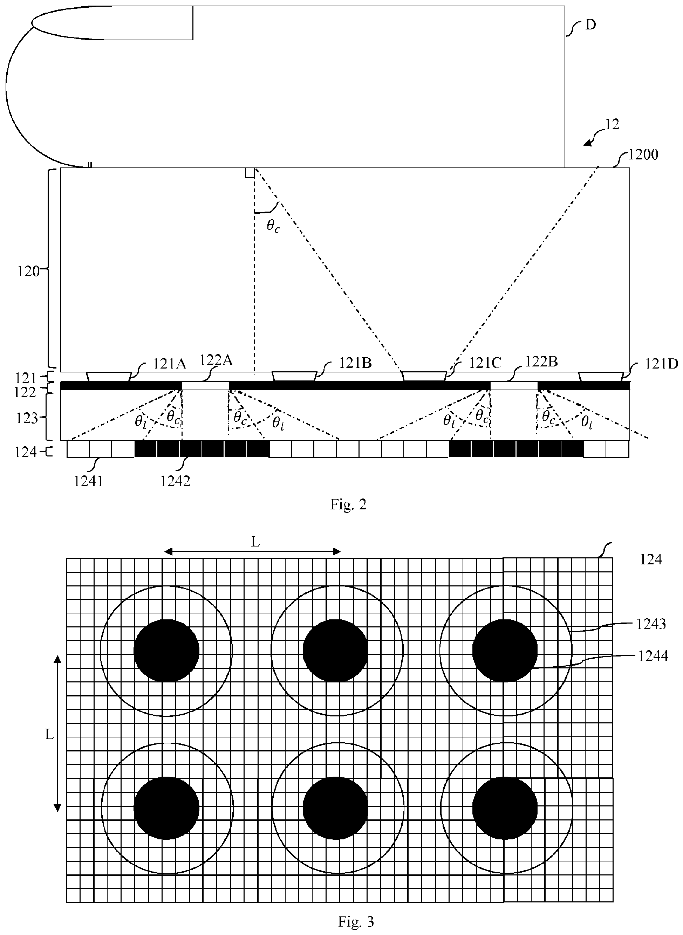

La **Fig. 2** illustre schématiquement un premier mode de réalisation du dispositif biométrique 12 selon l'invention.

Le dispositif biométrique 12 comprend une pluralité d'éléments optiquement couplés comprenant :

- une première lame transparente 120 d'épaisseur $E_{120}$ comprenant une face supérieure 1200 sur laquelle peut reposer la partie corporelle (ici le doigt D) portant l'empreinte digitale à imager ;
- une source lumineuse 121 adaptée pour éclairer le doigt D composée ici de DEL. Quatre DEL 121A, 121B, 121C et 121D sont représentées dans la Fig. 2 ;
- un écran opaque à la lumière 122 situé en dessous de la première lame transparente 120 ;
- une deuxième lame transparente 123 d'épaisseur $E_{123}$ située en dessous de l'écran opaque 122 ;
- un capteur 124 comprenant des photorécepteurs sensibles à la lumière situé en dessous de la deuxième lame transparente 123.

Les lames transparentes 120 et 123 ont un indice de réfraction supérieur à un indice de réfraction minimum prédéfini $n_{min}$ supérieur à l'indice de réfraction de l'air.

Dans un mode de réalisation, cet indice de réfraction minimum est supérieur à « 1.3 ».

Dans un autre mode de réalisation, cet indice de réfraction minimum est supérieur à l'indice de réfraction du doigt D, plus particulièrement supérieur à 1,47. Il est connu en effet que lorsque l'indice de réfraction d'au moins la deuxième lame 123 est supérieur à l'indice de réfraction du doigt, l'image du doigt est d'étendue finie.

Dans un mode de réalisation, les deux lames transparentes 120 et 123 ont un indice de réfraction différent.

Dans la suite de l'exposé, pour simplifier, nous supposons que les deux lames transparentes 120 et 123 ont un indice de réfraction identique et par exemple égal à « 1.5 ».

Il faut comprendre par optiquement couplé qu'un rayon allant de la face supérieure de la première lame à la face inférieure de la seconde lame ne traverse aucun milieu d'indice inférieur à $n_{min}$. Ceci peut se faire dans le cas de deux lames de verre par exemple par collage des deux lames avec une colle d'indice de réfraction suffisant.

Les faces des lames transparentes 120 et 123, l'écran opaque 122 et le capteur 124 sont parallèles. Ici, l'écran opaque 122 et le capteur 124 sont considérés comme des lames d'épaisseur inférieure à l'épaisseur des deux lames transparentes 120 et 123.

La source lumineuse 121 génère des faisceaux lumineux traversant la lame supérieure 120 ayant un angle incident par rapport à la normale à la face supérieure 1200 d'une valeur maximale inférieure à l'angle critique $\theta_c$.

Chaque DEL de la source lumineuse 121 génère un faisceau lumineux au-dessus de l'écran opaque 122 en direction de la face supérieure 1200. Chaque DEL est configurée de telle sorte que chaque rayon lumineux émanant de cette DEL ait un angle incident par rapport à la normale à la face supérieure 1200 d'une valeur maximale inférieure à l'angle critique $\theta_c$. De cette manière, aucun rayon lumineux émanant d'une DEL de la source lumineuse 121 ne subit de réflexion totale sur la face supérieure 1200. Avec une telle configuration de la source lumineuse 121, toute la surface du doigt D en regard de la face 1200 peut ne pas être éclairée. Toutefois, un doigt étant un milieu diffusant en volume, l'ensemble du doigt D en regard de la face supérieure 1200 renverra de la lumière si la distance entre deux parties éclairées est inférieure à une distance prédéfinie $d_p$ caractéristique d'une profondeur de pénétration de la lumière dans le doigt D variant d'environ un millimètre pour de la lumière bleue à quelques centimètres pour de la lumière infrarouge. Donc, afin que l'ensemble du doigt D en regard de la face supérieure 1200 soit éclairé, les DEL de la source lumineuse sont donc configurées de telle sorte que chaque DEL et la ou les DEL qui sont les plus proches voisines de ladite DEL génèrent sur le doigt D des parties éclairées directement par les DEL distantes d'une distance $\delta$ inférieure à la distance $d_p$, la distance $\delta$ étant la distance minimale entre deux frontières de parties éclairées. Le capteur 124 reçoit donc des faisceaux lumineux issus d'une diffusion par le doigt D des rayons lumineux produits par la source lumineuse 121. Ce type de source lumineuse permet d'obtenir *un dispositif de capture d'une empreinte digitale travaillant en réflexion totale à fond sombre.* Un avantage des dispositifs de capture d'une empreinte digitale travaillant en réflexion totale à fond sombre est qu'ils sont moins sensibles aux défauts de la face supérieure 1200.

L'écran opaque 122 est une couche mince qui peut être réalisée par exemple par impression ou par dépôt d'un revêtement opaque sur la lame 123. L'écran opaque 122 n'est toutefois pas totalement opaque puisqu'il est composé d'un réseau de trous. Chaque rayon de lumière dirigé vers le capteur 124 qui atteint l'écran opaque 122 au niveau d'un trou traverse l'écran opaque 122 et atteint le capteur 124. A la différence de la couche de collimation de la Fig. 6, chaque trou permet donc à un rayon lumineux venant du doigt D dirigé vers le capteur 124 à l'entrée dudit trou, d'atteindre le capteur 124.

Dans une mise en œuvre particulière, l'écran opaque 122 est une couche mince qui peut être réalisée par impression ou par dépôt d'un revêtement absorbant sur la face supérieure de la lame transparente 123 ou sur la face inférieure de la lame transparente 120 tel qu'un dépôt métallique. Chaque trou de l'écran opaque 122 est rempli d'une matière ayant un indice de réfraction supérieur à l'indice de réfraction minimum prédéfini $n_{min}$.

Le capteur 124 est par exemple un capteur CCD ou un capteur CMOS composé d'une matrice de photorécepteurs (tels que le photorécepteur 1241) sensibles à la longueur d'onde des faisceaux lumineux émis par la source lumineuse 121. Le capteur est optiquement couplé à la lame 123. Le capteur 124 reçoit de la lumière passant par les trous de l'écran opaque 122 et génère des informations à partir de la lumière reçue qui sont utilisées par le module de traitement 11 pour produire une image d'empreinte. L'image d'empreinte ainsi produite est composée d'une matrice de pixels, chaque pixel étant issu d'un ou plusieurs photorécepteurs. Pour obtenir un bon contraste entre les crêtes et les vallées des empreintes digitales, seuls les rayons lumineux issus du doigt D ayant un angle d'incidence par rapport à la normale à la face supérieure 1200 compris entre l'angle critique $\theta_c$ et l'angle limite $\theta_l$ doivent être considérés. Les rayons lumineux issus du doigt D après diffusion dans le doigt D, ont un angle d'incidence quelconque. Des rayons lumineux issus du doigt D et ayant des angles d'incidence inférieurs à l'angle critique $\theta_c$ pourraient donc atteindre le capteur 124 s'ils réussissent à franchir un des trous de l'écran opaque 122.

Afin d'empêcher la prise en compte des rayons lumineux ayant un angle d'incidence inférieur à l'angle critique $\theta_c$ dans les images d'empreinte générées par le module de traitement 11, le capteur 124 ne comprend pas de photorécepteurs sensibles à la lumière à chaque position du capteur pouvant être frappée par un rayon lumineux issu du doigt D ayant un angle d'incidence par rapport à la normale à la face supérieure 1200 inférieur à l'angle critique $\theta_c$. Chaque photorécepteur sensible à la lumière du capteur (124) est donc positionné en dehors de chaque position du capteur (124) pouvant être frappée par un rayon lumineux issu du doigt D ayant un angle d'incidence par rapport à la normale à la face supérieure 1200 inférieur à l'angle critique $\theta_c$. En d'autres termes, chaque photorécepteur est placé en dehors d'un ensemble des zones correspondant à une union des projections des trous sur le capteur (124) suivant tous les directions présentant un angle par rapport à ladite normale inférieur à l'angle critique $\theta_c$. De cette manière, seules des informations provenant des photorécepteurs situés à des positions pouvant être frappées par des rayons lumineux issus du doigt D après diffusion dans le doigt D ayant un angle d'incidence par rapport à la normale à la face supérieure 1200 compris entre l'angle critique $\theta_c$ et l'angle limite $\theta_l$ sont utilisées par le module de traitement 11 pour former des images d'empreintes.

Dans une mise en œuvre particulière, le capteur 124 ne comprend pas de photorécepteurs à chaque position pouvant être frappée par un rayon lumineux issu du doigt D après diffusion dans le doigt D ayant un angle d'incidence par rapport à la normale à la face supérieure 1200 inférieur à l'angle critique $\theta_c$. Le module de traitement 11 ne peut donc pas recevoir d'informations correspondant à des rayons lumineux issus du doigt D après diffusion dans le doigt D ayant un angle d'incidence par rapport à la normale à la face supérieure 1200 inférieur à l'angle critique $\theta_c$.

Dans une mise en œuvre particulière, le module de traitement 11 ne considère aucune information provenant d'un photorécepteur situé à une position pouvant être frappée par un rayon lumineux issu du doigt D après diffusion dans le doigt D ayant un angle d'incidence par rapport à la normale à la face supérieure 1200 inférieur à l'angle critique $\theta_c$ pour générer une image d'empreinte. Le module de traitement 11 utilise donc exclusivement des informations issues de photorécepteurs frappés par des rayons lumineux issus du doigt D après diffusion dans le doigt D ayant un angle d'incidence par rapport à la normale à la face supérieure 1200 compris entre l'angle critique $\theta_c$ et l'angle limite $\theta_l$. Les photorécepteurs générant des informations qui ne sont pas considérées par le module de traitement 11 sont donc rendus non-sensibles à la lumière *a posteriori* par voie d'un traitement logiciel.

Dans une mise en œuvre particulière, chaque photorécepteur du capteur 124 correspondant à une position pouvant être frappée par un rayon lumineux issu du doigt D après diffusion dans le doigt D ayant un angle d'incidence par rapport à la normale à la face supérieure 1200 inférieur à l'angle critique $\theta_c$ est masqué par une couche métallique opaque, par exemple en aluminium. Les photorécepteurs situés en dessous de la couche métallique opaque deviennent donc non-sensibles à la lumière et ne peuvent donc pas fournir d'informations correspondant à des rayons lumineux issus du doigt D après diffusion dans le doigt D ayant un angle d'incidence par rapport à la normale à la face supérieure 1200 inférieur à l'angle critique $\theta_c$ au module de traitement 11. Il est connu qu'un photorécepteur d'un capteur CCD ou CMOS frappé par un faisceau de lumière risque de perturber les photorécepteurs de son voisinage, notamment lorsque ces photorécepteurs sont fortement saturés (par exemple lorsque le capteur 124 est dirigé vers le soleil). Un avantage de cette mise en œuvre particulière par rapport aux deux mises en œuvre particulières précédentes est que, le masquage des photorécepteurs pouvant être frappés par un rayon lumineux issu du doigt D après diffusion dans le doigt D ayant un angle d'incidence par rapport à la normale à la face supérieure 1200 inférieur à l'angle critique $\theta_c$ empêche ces photorécepteurs de perturber leurs voisins.

Pour éviter que les zones d'incidences se recouvrent, les trous de l'écran opaque 122 sont agencés de telle sorte que la distance L entre un trou et le ou les trous qui sont ses plus proches voisins, prise de centre à centre, soit supérieure au diamètre d'une projection du doigt D sur le capteur 124 vu par un trou lorsque le doigt D est posé sur la face supérieure 1200. Si $d_T$ est le diamètre du trou, le diamètre de la projection du doigt D sur le capteur 124 vu par un trou $d_{AP}$ est donné par :

$$d_{AP} = d_T + 2.E_{123}.\tan(\theta_l)$$

et donc :

$$L > d_{AP}$$

On note que dans un cas général où les indices de réfraction de la lame 120 et la lame 123 sont différents, le diamètre $d_{AP}$ est donné par :

$$d_{AP} = d_T + 2.|\gamma|.E_{120}.\tan(\theta_l)$$

où y représente un grandissement du dispositif 12 :

$$\gamma = \frac{-E_{123} \times n_{120}}{E_{120} \times n_{123}}$$

où $n_{120}$ est l'indice de réfraction de la lame 120 et $n_{123}$ est l'indice de réfraction de la lame 123.

Dans une mise en œuvre particulière, les trous de l'écran opaque 122 sont espacés entre eux d'une distance $L > d_{AP}$ et, moyennant que la contrainte sur la distance L soit respectée, placés de manière quelconque sur l'écran opaque 122.

Dans une mise en œuvre particulière, les trous de l'écran opaque 122 sont espacés entre eux d'une distance $L > d_{AP}$ et placés régulièrement, par exemple sous forme d'une matrice rectangulaire ou d'un maillage hexagonal, sur l'écran opaque 122.

Dans la Fig. 2, les photorécepteurs du capteur 124 représentés en blanc (tels que le photorécepteur 1241) sont des photorécepteurs sensibles à la lumière. Les photorécepteurs du capteur 124 représentés en noir (tels que le photorécepteur 1242) sont des photorécepteurs non-sensibles à la lumière.

La **Fig.** 3 illustre schématiquement une sous partie vue de face du capteur 124 adapté pour le premier mode de réalisation du dispositif biométrique 12.

Nous nous plaçons ici dans le cas où les trous de l'écran opaque 122 sont espacés entre eux d'une distance $L > d_{AP}$ et placés régulièrement sous forme d'une matrice rectangulaire de trous.

Le capteur 124 est constitué d'une matrice de photorécepteurs carrés généralement de « 1 » à « 10 » $\mu m$ de côté.

Superposée au capteur 124 est représentée une série de zones d'incidence réparties régulièrement sur le capteur 124. Chaque zone d'incidence comprend un disque central tel que le disque 1244 et un anneau périphérique tel que l'anneau 1243, le disque central et l'anneau périphérique d'une zone d'incidence étant concentriques. Chaque zone d'incidence correspond à un des trous de l'écran opaque 122 et représente une projection du doigt D sur le capteur 124 vu par un trou lorsque le doigt D est posé sur la face supérieure 1200. Par exemple, la zone d'incidence comprenant le disque central 1244 et l'anneau périphérique 1243 correspond au trou 122A. Le diamètre extérieur de chaque anneau périphérique correspond donc au diamètre $d_{AP}$ d'une projection du doigt D sur le capteur 124 vu par un trou lorsque le doigt D est posé sur la face supérieure 1200. Les trous de l'écran opaque 122 prenant la forme d'une matrice rectangulaire de trous, les zones d'incidence suivent cette forme sur le capteur 124. Lorsque les trous de l'écran opaque 122 sont circulaires, le centre de la zone d'incidence correspondant à un trou et le centre dudit trou sont confondus. La partie située dans un anneau périphérique (par exemple l'anneau périphérique 1243) correspond à une zone recevant des rayons lumineux ayant traversé l'écran opaque 122 par un trou (ici le trou 122A) et ayant un angle incident avec la normale à la face supérieure 1200 compris entre l'angle critique $\theta_c$ et l'angle limite $\theta_l$. La partie située à l'intérieur du disque central (par exemple le disque central 1244) correspond à une zone recevant des rayons lumineux ayant traversé l'écran opaque 122 par un trou (ici le trou 122A) et ayant un angle incident avec la normale à la face supérieure 1200 inférieur à l'angle critique $\theta_c$. Chaque partie du capteur 124 située à l'intérieur d'un disque central correspond donc à une partie dont on ne souhaite pas récupérer de l'information. Les photorécepteurs situés dans chacune de ces parties doivent donc être non-sensibles à la lumière. Chaque partie du capteur 124 située dans un anneau périphérique correspond donc à une partie dont on souhaite récupérer de l'information. Les photorécepteurs situés dans chacune de ces parties doivent donc être sensibles à la lumière. Les photorécepteurs situés en dehors d'un anneau périphérique reçoivent peu, voire jamais de lumière provenant du doigt si l'indice de réfraction du doigt placé sur la face supérieure 1200 est inférieur à l'indice de réfraction des lames transparentes 120 et 123.

On note que chaque point du doigt D posé sur la face supérieure 1200 est imagé au moins une fois sur le capteur 124. Le dispositif biométrique 12 ayant une géométrie connue, il est possible de déterminer quel photorécepteur du capteur 124 image un point du doigt D. Il devient alors possible de reconstituer une image de l'empreinte du doigt D par des techniques connues.

Dans une mise en œuvre particulière, la distance L entre chaque trou permet d'imager au moins deux fois chaque point du doigt D en regard de la face supérieure 1200.

Dans une mise en œuvre particulière, lorsqu'un même point du doigt D est imagé par plusieurs photorécepteurs du capteur 124, le module de traitement 11 prend en compte l'information issue de chaque photorécepteur ayant imagé ce point pour générer une représentation de ce point dans l'image de l'empreinte.

Dans une mise en œuvre particulière, les lames transparentes 120 et 123 sont des lames de verre carrées de « 4.4 »$mm$ de côté et, comme nous l'avons vu plus haut, d'indice de réfraction $n_1$ = 1.5. Le capteur 124 est de forme carrée de « 3.9 »$mm$ de côté comprenant des photorécepteurs carrés de « 4 »$\mu m$ de côté.

Dans une mise en œuvre particulière, la lame transparente 123 a une épaisseur $E_{123}$ trois à dix fois inférieure à l'épaisseur $E_{120}$ de la lame transparente 120. Par exemple, l'épaisseur $E_{123} = 60\mu m$ et l'épaisseur $E_{120} = 300\mu m$ permettent, lorsque les deux lames ont le même indice de réfraction, d'obtenir un grandissement de $^{-1}/_5$ (i.e. une image d'un objet sur le capteur 124 est cinq fois plus petite que l'objet réel posé sur la face supérieure 1200 et inversement une zone sur le capteur 124 correspond à une zone 5 fois plus grande sur la face supérieure 1200). Dans cette mise en œuvre particulière, la lame transparente 123 est collée sur le capteur 124 ou réalisée par une série de dépôt sur le capteur 124.

Dans une autre mise en œuvre, l'épaisseur $E_{123}$ = $150\mu m$ et l'épaisseur $E_{120} = 750\mu m$, produisant le même grandissement de $^{-1}/_5$.

Les standards d'imagerie d'empreintes digitales préconisent des résolutions d'images de doigt supérieures à 500 ou 1000 points par pouce (dpi). Avec un grandissement de $^{-1}/_5$, si l'on désire une image de doigt échantillonnée à plus de 500 dpi (resp. 1000 dpi), il faut des pixels de moins de 10 $\mu$m (resp. moins de 5 $\mu$m).

Dans une mise en œuvre particulière, les trous de l'écran opaque 122 ont un diamètre de « 7 »$\mu m$ et forment une matrice régulière de 10 × 10 trous dans laquelle les trous sont espacés d'une distance L=$400\mu m$ de centre à centre les uns des autres tel que représenté en Fig. 3. Avec un angle critique $\theta_c$ = 41.8 degrés, un angle limite $\theta_l$ = 70 degrés, un diamètre de trou de « 7 »$\mu m$ et une épaisseur de la lame 123 de « 60 »$\mu m$, chaque disque central a un diamètre d'environ « 114 »$\mu m$ et chaque anneau périphérique a un diamètre extérieur d'environ « 337 »$\mu m$.

Dans une mise en œuvre particulière, la face inférieure de l'écran opaque 122 et les bords des trous sont rendus absorbants en appliquant des techniques connues (application d'une couche de chrome noir, d'une couche d'encre, texturation de la face inférieure, etc.) afin de minimiser des réflexions entre l'écran opaque 122 et le capteur 124. Dans une mise en œuvre particulière, les trous de l'écran opaque 122 ne sont pas circulaires, mais ont une forme d'anneau ou une forme plus complexe. Ceci permet avec le principe d'ouverture codée (décrit dans la page internet https://en.wikipedia.org/wiki/Code d_aperture ) d'augmenter la surface du trou tout en améliorant la précision de l'image obtenue après un traitement logiciel (déconvolution). Cela permet d'améliorer simultanément un rapport signal sur bruit et une précision de l'image d'empreinte.

Dans une mise en œuvre particulière, les trous de l'écran opaque 122 sont des trous codés tels que définis dans le document « Image and Depth from a Conventional Camera with a Coded Aperture ; A. Levin, R. Fergus, F. Durand, W. T. Freeman, ACM Tr. On Graphics, Vol. 26, N°. 3, Article 70, July 2007 ».

Dans une mise en œuvre particulière, les DEL, qui sont représentées dans la Fig. 2 en dehors des lames 120 et 123 pour plus de clarté, sont soit intégrées sur une face inférieure de la lame 120 (i.e. la face de la lame 120 qui est en contact avec l'écran opaque 122), soit intégrées sur la face supérieure de la lame 123 (i.e. la face de la lame 123 comprenant l'écran opaque 122).

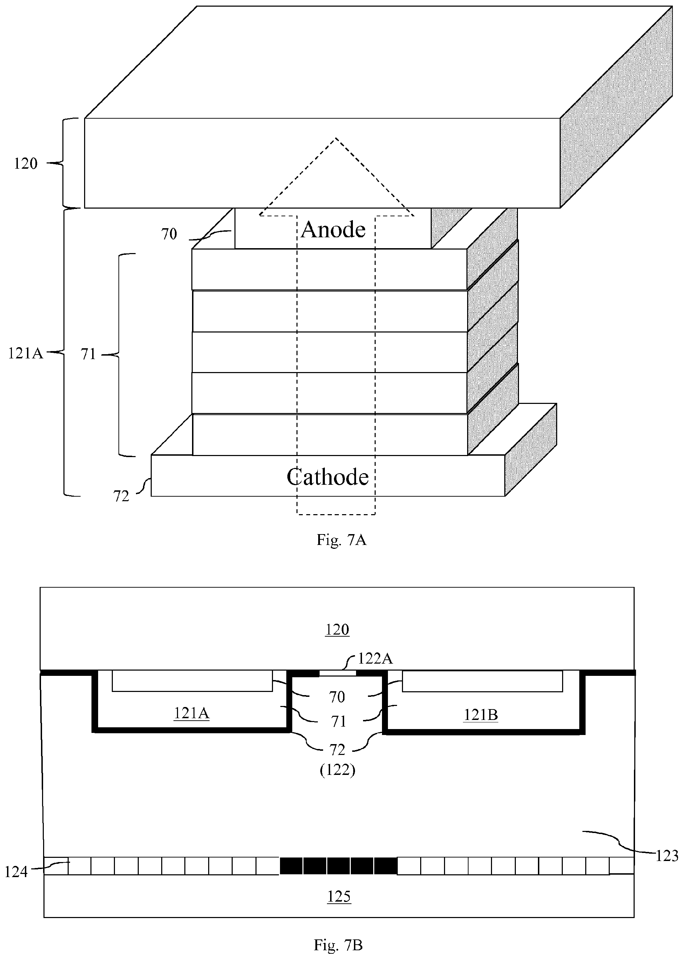

Les Figs. 7A et 7B décrivent de manière détaillée une mise en œuvre particulière du premier mode de réalisation dans laquelle les DEL sont intégrées sur la face inférieure de la lame 120.

La Fig. 7A décrit, de manière détaillée, une DEL adaptée au premier mode de réalisation.

Dans le cas de la Fig. 7A, la DEL est une OLED. On prend ici l'exemple de la DEL 121A.

La DEL 121A comprend dans une première couche une première électrode 70 transparente réalisée par exemple par dépôt et gravure sur la face inférieure de la lame 120 d'un alliage d'oxyde d'indium dopé à l'étain (« Indium tin oxide (ITO) ») en terminologie anglo-saxonne).

Dans une deuxième couche située immédiatement en dessous de la première, la DEL 121A comprend un empilement de couches pour former l'OLED 71 réalisée par exemple par dépôt et gravure ou par impression. Les couches formant l'OLED 71 sont quasiment transparentes. Notons que la deuxième couche peut comprendre un autre type de DEL.

Dans une troisième couche située immédiatement en dessous de la deuxième, la DEL 121A comprend une deuxième électrode 72. L'électrode 72 comprend une couche de métal qui fait office de miroir réflecteur pour récupérer la lumière qui se dirige vers le bas (i.e. vers le capteur 124) et ainsi augmenter le rendement lumineux vers le haut. De plus, cela évite d'éblouir le capteur 124. Dans un mode de réalisation, la deuxième électrode 72 comprend une seconde couche située en dessous de la couche de métal, la seconde couche étant non conductrice et absorbante. Nous montrons par la suite en relation avec la Fig. 7B que la deuxième électrode 72 sert aussi d'écran opaque 122.

Comme le montre la flèche en pointillés, la lumière produite par la DEL 121A se dirige vers le haut, c'est-à-dire vers la lame transparente 120.

Les différentes couches constituant la DEL 121A ont une épaisseur de l'ordre du micromètre.

La Fig. 7B détaille un exemple d'assemblage de la lame 120, de la source lumineuse 121, de l'écran opaque 122, de la lame 123 et du capteur 124 dans le dispositif biométrique 12.

Nous n'avons représenté dans la Fig. 7B qu'une sous partie du dispositif biométrique 12.

Dans la Fig. 7B, nous retrouvons la lame 120 qui comprend la DEL 121A et la DEL 121B, qui est identique à la DEL 121A. Pour chaque DEL nous retrouvons la première électrode 70, la pile d'OLED 71 et la deuxième électrode 72. La deuxième électrode 72 se prolonge sur la face inférieure de la lame 120, mais comprend un trou. La deuxième électrode 72 est conjointe entre chaque DEL composant la source lumineuse 121. Le trou représenté dans la deuxième électrode 72 correspond à un trou, ici le trou 122A, de l'écran opaque 122. Plus globalement, la couche de métal formant la deuxième électrode comprend des trous situés entre les DEL et l'écran opaque 122 est mis en œuvre par ladite couche de métal. Dans un mode de réalisation, ces trous ont un diamètre de plus de « 100 » $\mu$m.

Dans un mode de réalisation, la lame 123 est collée sur sa face supérieure à l'écran opaque 122 et sur sa face inférieure au capteur 124.

Dans un mode de réalisation, les premières électrodes sont elles aussi reliées ensemble, ce qui permet de contrôler toutes les OLED ensemble.

Dans un mode de réalisation, le capteur 124 est réalisé sur une lame de verre 125 ou sur une lame de silicium.

Dans une mise en œuvre particulière, les DEL sont des DEL au nitrure de gallium (GaN) ou des OLED.

Dans une mise en œuvre particulière, les DEL pourraient être remplacées par un dispositif de génération d'un faisceau laser.

Dans une mise en œuvre particulière, chaque DEL génère un faisceau lumineux avec une longueur d'onde supérieure à « 600 » nm, pour une meilleure pénétration dans le doigt et ainsi une meilleure diffusion. Dans une mise en œuvre particulière, la longueur d'onde des faisceaux lumineux émis par la DEL est inférieure à « 980 » nm afin de pouvoir utiliser des capteurs sensibles à la lumière en silicium.

Dans une mise en œuvre particulière, des lentilles convergentes sont placées dans les trous de l'écran opaque 122. Ces lentilles ont idéalement une distance focale au plus égale à la distance entre la lentille et le capteur (ici cette distance est égale à l'épaisseur $E_{123}$). Le diamètre des lentilles peut être plus grand que le diamètre des trous afin de collecter plus de lumière. Cette mise en œuvre particulière permet d'utiliser des trous et des lentilles d'un diamètre supérieur au diamètre des trous utilisés jusque-là dans les mises en œuvre précédentes et permet donc de collecter davantage de lumière.

Dans une mise en œuvre particulière, un filtre peut être ajouté au niveau des trous pour filtrer les rayons lumineux ayant des longueurs d'onde ne correspondant pas aux longueurs d'onde générées par les DEL. De cette manière, on diminue un risque que les images d'empreintes soient parasitées par des rayons lumineux externes au dispositif biométrique 12.

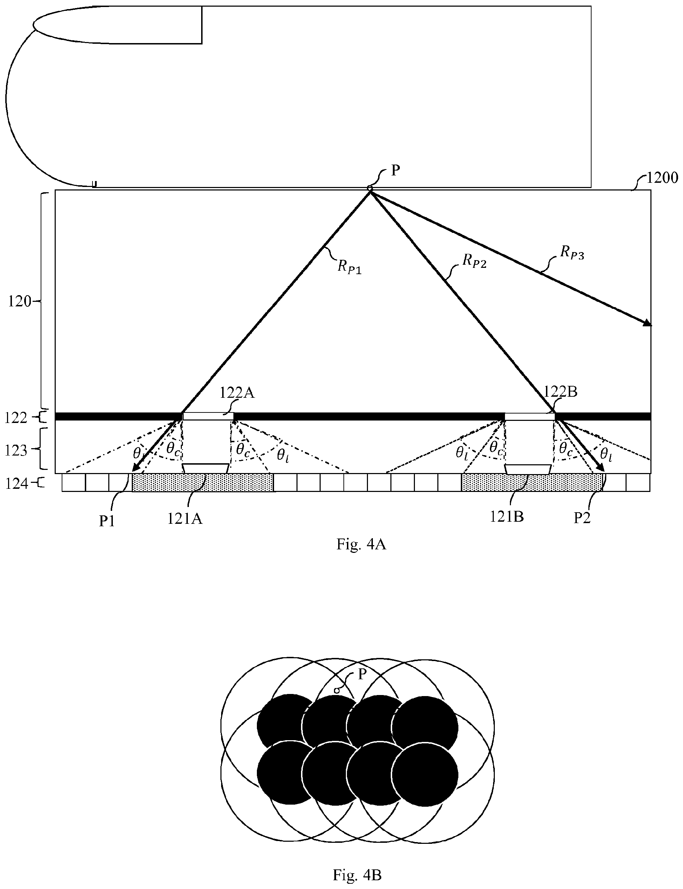

La **Fig. 4A** illustre schématiquement un deuxième mode de réalisation du dispositif biométrique 12 selon l'invention.

Dans ce mode de réalisation, nous retrouvons la lame 120, l'écran opaque 122, la lame 123 et le capteur 124.

Dans ce mode de réalisation, la source de lumière n'est plus située au niveau de l'écran opaque 122. Des DEL sont insérées au niveau du capteur 124, *i.e.* sous l'écran opaque 122. Au moins une partie des trous de l'écran opaque 122 a une DEL en vis-à-vis.

Afin que l'ensemble du doigt D diffuse de la lumière, dans toutes les mises en œuvre particulières relatives au mode de réalisation de la Fig. 4A, les trous de l'écran opaque 122 ayant une DEL en vis-à-vis sont agencés de telle sorte que chaque DEL et la ou les DEL qui sont les plus proches voisines de ladite DEL génèrent des parties directement éclairées par les DEL distantes d'une distance $\delta$ inférieure à la distance $d_p$.

Par ailleurs, afin d'éviter les recouvrements entre les zones d'incidence, dans toutes les mises en œuvre particulières relatives au mode de réalisation de la Fig. 4A, les trous de l'écran opaque 122 servant à imager le doigt D sont agencés de telle sorte que la distance minimum L entre un trou et le ou les trous qui sont ses plus proches voisins, prise de centre à centre, soit supérieure au diamètre de l'image du doigt D projetée sur le capteur 124 vu par un trou lorsque le doigt D est posé sur la face supérieure 1200, c'est-à-dire $L > d_{AP}$.

Chaque DEL peut être réalisée par dépôt sur le capteur 124. Dans ce cas chaque DEL est intégrée en surface du capteur 124.

Dans une mise en œuvre particulière, chaque DEL est intégrée dans le capteur 124.

Dans une mise en œuvre particulière, chaque DEL génère un faisceau de lumière dirigé vers les trous ayant un angle d'incidence maximal $\theta_{max}$ par rapport à une normale à la face supérieure 1200 permettant d'éviter qu'après réflexion sur l'écran opaque 122, ces DEL éclairent des photorécepteurs sensibles à la lumière. Dans une mise en œuvre particulière, $\theta_{max}$ = 23 degrés.

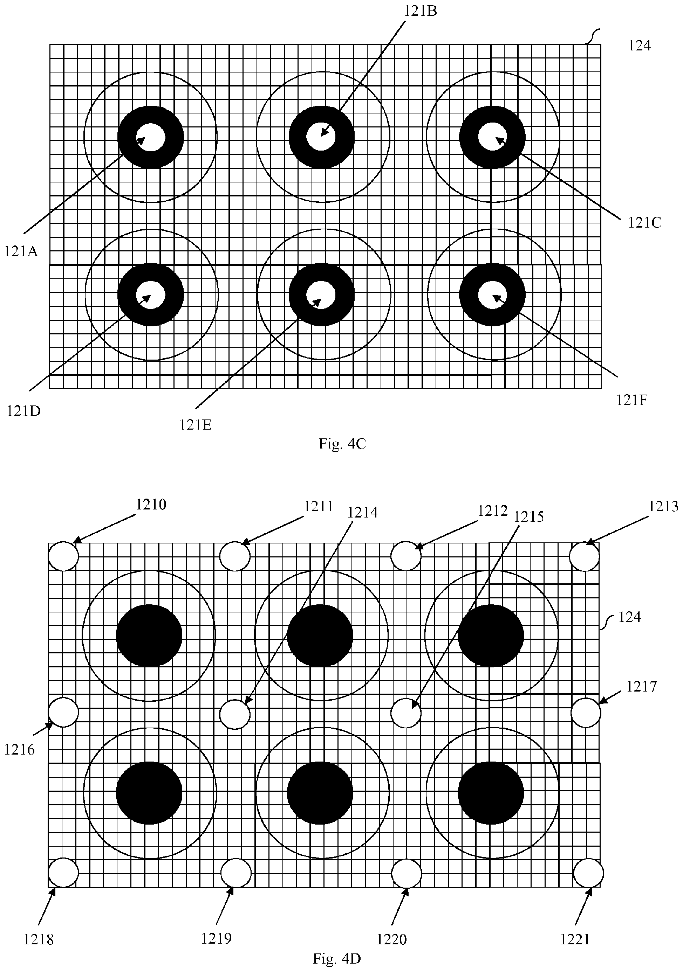

La **Fig. 4C** illustre schématiquement une sous partie vue de face d'un premier exemple de capteur 124 adapté au deuxième mode de réalisation du dispositif biométrique 12.

Dans le cas de la Fig. 4C, les trous de l'écran opaque 122 forment une matrice rectangulaire de trous.

Dans la Figure 4C, des DEL ont été insérées à des positions correspondant au centre de chaque disque central. On retrouve les DEL 121A et 121B représentées en Fig. 4A, et des DEL 121C, 121D, 121E et 121F. On trouve donc une DEL à chaque position du capteur 124 recevant des rayons lumineux ayant traversé l'écran opaque 122 par un trou et ayant un angle incident avec la normale à la face supérieure 1200 inférieur à l'angle critique $\theta_c$. Dans cette mise en œuvre particulière, il y a donc une DEL positionnée au niveau du capteur 124 en face de chaque trou de l'écran opaque 122. Donc, de la même manière que les trous forment une matrice de trous sur l'écran opaque 122, les DEL forment une matrice de DEL sur le capteur 124. Comme dans le premier mode de réalisation du dispositif biométrique 12, les photorécepteurs situés dans un disque central sont non-sensibles à la lumière.

Avec des trous circulaires, chaque DEL éclaire un disque en face d'elle sur le doigt D lorsque celui-ci est posé sur la face supérieure 1200. Lorsque, par exemple, la lame transparente 120 et la lame transparente 123 ont respectivement une épaisseur de $E_{123} = 60 \mu m$ et $E_{120} = 300 \mu m$, les trous ont un diamètre de « 7 » $\mu m$, et chaque DEL est circulaire avec un diamètre de « 10 » $\mu m$, chaque DEL éclaire un disque d'environ « 92 » $\mu m$. Avec un écran opaque comprenant des trous régulièrement répartis avec une distance de « 400 » $\mu m$ entre les centres des trous, toute la surface du doigt D posé sur la face supérieure 1200 n'est pas éclairée par les DEL. Mais, comme nous l'avons vu plus haut, un doigt étant un milieu diffusant, l'ensemble de la surface du doigt en regard de la face supérieure 1200 renverra de la lumière.

Dans cette configuration, si on projette une zone d'incidence sur la face supérieure 1200 à travers le trou de l'écran opaque 122 correspondant à ladite zone d'incidence, on obtient une projection du disque central de diamètre environ égal à « 544 » $\mu m$ et une projection de l'anneau périphérique de diamètre extérieur environ égal à « 1656 » $\mu m$. Avec des trous régulièrement répartis avec une distance de « 400 » $\mu m$ entre les centres des trous, les projections des anneaux périphériques se recouvrent.

La **Fig. 4B** illustre schématiquement un fonctionnement du deuxième mode de réalisation du dispositif biométrique 12.

Dans la Fig. 4B, on reprend le dispositif de la Fig. 4C.

Dans la Fig. 4B, nous avons représenté les projections de 8 zones d'incidences sur la face supérieure 1200. Un point P, aussi représenté dans la Fig. 4A, apparaît dans la projection de trois anneaux périphériques différents. Ce point P est donc imagé trois fois sur le capteur 124 : une première fois en un point P1 en suivant un rayon $R_{P1}$, une deuxième fois en un point P2 en suivant un rayon $R_{P2}$ et une troisième fois en un point non représenté en suivant un rayon $R_{P3}$. Imager plusieurs fois chaque point du doigt D permet d'obtenir une meilleure qualité d'image.

Dans le deuxième mode de réalisation du dispositif biométrique 12, il est difficile d'empêcher une DEL de perturber les photorécepteurs de son voisinage. Pour limiter ces perturbations, dans une mise en œuvre particulière, une DEL sur deux pour chaque ligne et une DEL sur deux pour chaque colonne de la matrice de DEL sont allumées pour permettre la capture d'une première image intermédiaire et inversement seules les DEL non allumées pour la première image intermédiaire sont allumées pour capturer une seconde image intermédiaire. Chaque photorécepteur situé dans un voisinage prédéfini d'une DEL allumée n'est pas utilisé pour former une image intermédiaire. Chaque photorécepteur utilisé pour former une image est donc situé à l'extérieur d'un voisinage prédéfini de chaque DEL allumée. Par exemple, dans cette mise en œuvre particulière, seuls les photorécepteurs situés dans les anneaux périphériques correspondant à des DEL éteintes sont utilisés pour former les première et seconde images intermédiaires. Les première et seconde images intermédiaires sont ensuite combinées par le module de traitement 11 pour former l'image de l'empreinte du doigt D. De cette manière, on réduit le nombre de photorécepteurs qui sont proches d'une DEL allumée.

Plus généralement, dans une autre mise en œuvre particulière, les DEL sont regroupées en une pluralité d'ensembles de DEL. Les ensembles de DEL sont allumés successivement et une image intermédiaire est acquise lors de chaque allumage d'un ensemble de DEL. Lorsqu'un ensemble de DEL est allumé, les autres ensembles de DEL sont éteints. Seuls les photorécepteurs situés dans les anneaux périphériques correspondant à des DEL éteintes sont utilisés pour former les images intermédiaires. Les images intermédiaires obtenues sont ensuite combinées par le module de traitement 11 pour former l'image de l'empreinte du doigt D.

Dans une mise en œuvre particulière, au moins un ensemble de DEL est allumé pour former une image intermédiaire. Les images intermédiaires obtenues sont ensuite combinées par le module de traitement 11 pour former l'image de l'empreinte du doigt D.

Dans une autre mise en œuvre particulière permettant de limiter les perturbations, seul un trou sur deux par ligne de la matrice de trous et un trou sur deux par colonne de la matrice de trous de l'écran opaque 122 sont associés à une DEL. Dans cette mise en œuvre particulière, une seule image est générée. Seuls les photorécepteurs situés dans les anneaux périphériques ne comprenant pas de DEL sont utilisés pour former ladite image. Dans une variante de cette mise en œuvre particulière, les trous peuvent être spécialisés. Ainsi, les trous utilisés pour amener la lumière en direction du doigt D peuvent être plus grands que les trous utilisés pour imager le doigt D sur le capteur 124. Dans une mise en œuvre particulière, les trous utilisés pour imager ont un diamètre de « 7 » $\mu m$ alors que les trous utilisés pour amener la lumière en direction du doigt D ont un diamètre de « 50 » $\mu m$, la DEL pouvant être adaptée à la taille du trou et avoir le même diamètre.

Plus généralement, dans une autre mise en œuvre particulière, au moins un trou de l'écran opaque est associé à une DEL.

Dans une autre mise en œuvre permettant de limiter les perturbations, les DEL ne sont pas situées au centre de chaque disque central mais en dehors des anneaux périphériques.

La **Fig. 4D** illustre schématiquement une sous partie vue de face d'un deuxième exemple de capteur 124 adapté au deuxième mode de réalisation du dispositif biométrique 12 dans laquelle les DEL sont positionnées en dehors des anneaux périphériques.

Dans l'exemple de la Fig. 4D, les trous de l'écran opaque 122 associés à une DEL forment une première matrice rectangulaire et les trous de l'écran opaque non associés à une DEL forment une deuxième matrice rectangulaire de trous imbriquée dans la première matrice rectangulaire de trous. Chaque trou associé à une DEL est positionné à égale distance du centre des quatre trous les plus proches de son voisinage. Sur le capteur 124, chaque DEL (1210 à 1221) est donc positionnée à égale distance du centre des quatre anneaux périphériques les plus proches de son voisinage. Dans cette mise en œuvre particulière, chaque DEL fait donc face à un trou dans l'écran opaque 122 permettant d'amener la lumière en direction du doigt D et chaque zone d'incidence fait face à un trou dans l'écran opaque permettant d'imager le doigt sur le capteur 124. Comme dans la mise en œuvre particulière précédente, les trous utilisés pour imager et les trous utilisés pour amener la lumière en direction du doigt D peuvent avoir un diamètre différent. Dans cette mise en œuvre particulière, pour éviter toute perturbation des photorécepteurs situés au voisinage des DEL, les photorécepteurs situés en dehors d'un anneau périphérique sont rendus non-sensibles à la lumière.

Par ailleurs, comme dans la mise en œuvre particulière précédente décrite en relation avec la Fig. 4B, pour limiter les perturbations des photorécepteurs par des DEL trop proches, les DEL peuvent être regroupées en une pluralité d'ensembles de DEL allumés successivement pour générer des images intermédiaires qui sont combinées ensuite pour former une image d'empreinte.

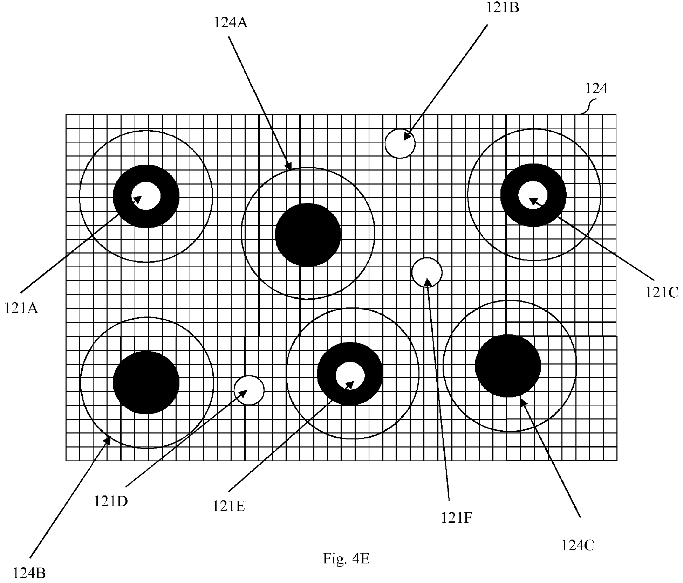

La Fig. 4E illustre schématiquement une sous-partie vue de face d'un troisième exemple de capteur adapté au deuxième mode de réalisation du dispositif de capture d'une empreinte d'une partie corporelle selon l'invention.

Dans l'exemple, les trous de l'écran opaque 122 sont espacés entre eux d'une distance $L > d_{AP}$ et, moyennant que la contrainte sur la distance L soit respectée, placés de manière quelconque sur l'écran opaque 122. Chaque DEL est associée à un trou, c'est-à-dire que chaque DEL fait face à un trou. Certains trous servent exclusivement à amener les lumières des DEL vers le doigt D posé sur la face 1200 : il s'agit des trous associés aux DEL 121B, 121D et 121F. Certains trous servent à la fois à amener les lumières des DEL vers le doigt D posé sur la face 1200 et à imager le doigt D sur le capteur 124 : il s'agit des trous associés avec les DEL 121A, 121C et 121E. Certains trous servent exclusivement à imager le doigt D sur le capteur 124 : il s'agit des trous associés avec les zones d'incidences 124A, 124B et 124C.

Par ailleurs, comme dans la mise en œuvre particulière précédente décrite en relation avec la Fig. 4B, pour limiter les perturbations des photorécepteurs par des DEL trop proches, les DEL peuvent être regroupées en une pluralité d'ensembles de DEL allumés successivement pour générer des images intermédiaires qui sont combinées pour former une image d'empreinte.

On note que les premier et deuxième modes de réalisation du dispositif biométrique 12 ont été présentés séparément mais que certaines mises en œuvre particulières de chaque mode de réalisation peuvent être aisément adaptées à l'autre mode de réalisation. Notamment, l'écran opaque 122 de la Fig. 4E pourrait aussi être utilisé dans le cadre du premier mode de réalisation.

De plus, lorsque le dispositif biométrique 12 est intégré dans l'écran 10, la face supérieure 1200 est intégrée dans la vitre de l'écran 10. On considère alors que la face 1200 est la sous-partie de la vitre de l'écran 10 qui est en regard de l'écran opaque 122, de la lame 123 et du capteur 124.

Dans un mode de réalisation, le module de traitement 11 met en œuvre un procédé de détection de fraude tirant profit des caractéristiques du dispositif biométrique 12.

Le diamètre externe de l'anneau périphérique de chaque zone d'incidence ne dépend que de l'angle limite $\theta_l$ et de l'épaisseur de la lame transparente 123. L'angle limite $\theta_l$ dépend de l'indice de réfraction de la peau du doigt D. Comme nous l'avons vu plus haut, il est généralement admis que l'indice de réfraction de la peau, suivant la longueur d'onde de la source lumineuse, est compris entre « 1.41 » et « 1.47 ». L'angle limite $\theta_l$ est alors compris entre une valeur minimum $\theta_l^{min}$ ici égale à « 70° » et une valeur maximum $\theta_l^{max}$ ici égale à « 76° », ce qui permet de déduire une gamme de valeurs dans laquelle doit être compris le diamètre externe d'un anneau périphérique.

La Fig. 8 illustre schématiquement un procédé de détection de fraude utilisant le dispositif biométrique 12.

Dans une étape 81, le module de traitement 11 détermine si le capteur 124 est frappé par des rayons lumineux ayant un angle incident par rapport à la normale à la face supérieur 1200 supérieur à l'angle maximum $\theta_l^{max}$ ou si dans au moins une zone prédéterminée du capteur 124, ledit capteur 124 est exclusivement frappé par des rayons lumineux ayant un angle incident par rapport à la normal à la face supérieure 1200 inférieur à l'angle minimum $\theta_l^{min}$. Pour ce faire, dans un mode de réalisation, le module de traitement détermine si le diamètre externe réel d'au moins un anneau périphérique est supérieur à un diamètre maximum $d_{AP}^{max}$ tel que :

$$d_{AP}^{max} = d_T + 2.\,|\gamma|.\,E_{120}.\tan(\theta_l^{max})$$

ou inférieure à un diamètre minimum $d_{AP}^{max}$ tel que :

$$d_{AP}^{min} = d_T + 2.\,|\gamma|.\,E_{120}.\tan(\theta_l^{min})$$

Le module de traitement 11 peut déterminer si le diamètre externe réel d'au moins un anneau périphérique est supérieur au diamètre maximum $d_{AP}^{max}$ en déterminant si au moins un photorécepteur situé en dehors des anneaux périphériques de rayons $d_{AP}^{max}$ génère une information indiquant qu'il est frappé par un rayon lumineux.

Le module de traitement 11 peut déterminer si le diamètre externe réel d'au moins un anneau périphérique est inférieur au diamètre minimum $d_{AP}^{min}$ en déterminant si aucun photorécepteur situé en dehors des anneaux périphériques de rayons $d_{AP}^{min}$ génère une information indiquant qu'il est frappé par un rayon lumineux.

Dans une étape 82, le module de traitement 11 détecte qu'il y a fraude si le capteur 124 est frappé par des rayons lumineux ayant un angle incident par rapport à la normale à la face supérieure 1200 supérieur à la l'angle maximum $\theta_l^{max}$ ou exclusivement inférieur à l'angle minimum $\theta_l^{min}$. Le module de traitement 11 en déduit alors que le doigt D en regard de la face 1200 comprend au moins une partie qui n'est pas recouverte de peau.

La **Fig. 9** illustre schématiquement un exemple d'architecture matérielle du module de traitement 11.

Selon l'exemple d'architecture matérielle représenté à la Fig. 9, le module de traitement 11 comprend alors, reliés par un bus de communication 110 : un processeur ou CPU (« Central Processing Unit » en anglais) 111 ; une mémoire vive RAM (« Random Access Memory » en anglais) 112 ; une mémoire morte ROM (« Read Only Memory » en anglais) 113 ; une unité de stockage telle qu'un disque dur ou un lecteur de support de stockage, tel qu'un lecteur de cartes SD (« Secure Digital » en anglais) 114 ; au moins une interface de communication 115 permettant au module de traitement 11 de communiquer avec le dispositif biométrique 12.

Le processeur 111 est capable d'exécuter des instructions chargées dans la RAM 112 à partir de la ROM 113, d'une mémoire externe (non représentée), d'un support de stockage (tel qu'une carte SD), ou d'un réseau de communication. Lorsque le module d'analyse 11 est mis sous tension, le processeur 111 est capable de lire de la RAM 112 des instructions et de les exécuter. Ces instructions forment un programme d'ordinateur causant la mise en œuvre, par le processeur 111, du procédé décrit en relation avec la Fig. 8.

Le procédé décrit en relation avec la Fig. 8 peut être implémenté sous forme logicielle par exécution d'un ensemble d'instructions par une machine programmable, par exemple un DSP (« Digital Signal Processor » en anglais),un microcontrôleur ou un GPU (processeur graphique, « Graphics Processing Unit » en terminologie anglo-saxonne), ou être implémenté sous forme matérielle par une machine ou un composant dédié, par exemple un FPGA (« Field-Programmable Gate Array » en anglais) ou un ASIC (« Application-Specific Integrated Circuit » en anglais).

On note que le module de traitement 11 aurait tout aussi bien pu être compris dans le dispositif biométrique 12.

## Revendications

1. Dispositif de capture d'une empreinte d'une partie corporelle comprenant une pluralité d'éléments optiquement couplés comprenant :

   • une première lame transparente (120) comprenant une face supérieure (1200) sur laquelle peut reposer la partie corporelle portant l'empreinte à imager ;
   • une source lumineuse (121);
   • un écran opaque à la lumière (122) situé en dessous de la première lame transparente (120);
   • une deuxième lame transparente (123) située en dessous de l'écran opaque (122);
   • un capteur (124) comprenant des photorécepteurs sensibles à la lumière situé en dessous de la deuxième lame transparente (123) fournissant des informations permettant de générer une image de l'empreinte ;

   les faces des lames transparentes, l'écran opaque et le capteur étant parallèles, **caractérisé en ce que** :

   la source lumineuse génère des faisceaux lumineux traversant au moins la première lame transparente en direction de la face supérieure (1200) ayant un angle incident par rapport à une normale à ladite face supérieure (1200) d'une valeur inférieure à un angle critique donné par les indices de réfraction de la première lame et de l'air et au-delà duquel angle critique un rayon lumineux est totalement réfléchi par ladite face supérieure en présence d'air au-dessus de ladite face supérieure ;
   l' écran opaque (122) comprend un réseau de trous tels que chaque rayon lumineux dirigé vers le capteur (124) qui atteint l'écran opaque (122) au niveau d'un trou traverse l'écran opaque (122) et atteint le capteur (124) ;
   chaque photorécepteur sensible à la lumière du capteur (124) est positionné à des positions du capteur (124) pouvant être frappées par un rayon lumineux issu de la partie corporelle après diffusion dans la partie corporelle ayant un angle d'incidence par rapport à ladite normale compris entre l'angle critique et l'angle limite, l'angle limite étant donné par les indices de réfraction de la première lame et de la peau et au-delà duquel angle limite un rayon lumineux est totalement réfléchi par ladite face supérieure en présence de d'une crête de la peau au-dessus de ladite face supérieure;
   chaque point de la partie corporelle en contact avec la face supérieure (1200) est imagé par au moins un photorécepteur dudit capteur.

2. Dispositif selon la revendication 1, **caractérisé en ce que** au moins une partie des trous, dit trous imageants, servent à imager la partie corporelle, et **en ce qu'**une distance entre un trou imageant et le ou les trous imageants qui sont ses plus proches voisins, prise de centre à centre, est supérieure au diamètre d'une image de la partie corporelle vue par un trou lorsque la partie corporelle est posée sur la face supérieure.

3. Dispositif selon la revendication 1 ou 2, **caractérisé en ce que** la source lumineuse est composée d'une pluralité de diodes électroluminescentes, dites DEL, les DEL sont configurées de telle sorte que chaque DEL produisant de la lumière et la ou les DEL produisant de la lumière qui sont les plus proches voisines de ladite DEL génèrent sur la partie corporelle des parties éclairées directement par lesdites DEL distantes d'une distance inférieure à une distance prédéfinie caractéristique d'une profondeur de pénétration de la lumière dans la partie corporelle dépendante d'une longueur d'onde de la lumière produite par chaque DEL.

4. Dispositif selon la revendication 3, **caractérisé en ce que** la source lumineuse est intégrée sur une face inférieure de la première lame ou intégrée sur une face supérieure de la deuxième lame et génère un faisceau lumineux au-dessus de l'écran opaque.

5. Dispositif selon la revendication 3, **caractérisé en ce que** la source lumineuse est intégrée en surface du capteur ou intégrée dans le capteur et génère un faisceau lumineux en dessous de l'écran opaque traversant l'écran opaque par l'intermédiaire des trous en direction de la face supérieure et chaque DEL de la source lumineuse est positionnée en face d'un trou de l'écran opaque, au moins une partie des trous étant associée à une DEL.

6. Dispositif selon la revendication 5, **caractérisé en ce que** les DEL sont regroupées en ensembles de DEL, chaque ensemble de DEL étant destiné à être allumé indépendamment des autres ensembles de DEL, au moins un des ensembles de DEL étant allumé pour acquérir une image intermédiaire, chaque image intermédiaire acquise étant utilisée pour former l'image de l'empreinte.

7. Dispositif selon la revendication 6, **caractérisé en**

**ce que** chaque photorécepteur utilisé pour former une image est situé à l'extérieur d'un voisinage prédéfini de chaque DEL allumée.

8. Dispositif selon la revendication 5 ou 6, **caractérisé en ce que** les trous de l'écran opaque forment une matrice rectangulaire de trous, un trou sur deux par ligne de la matrice rectangulaire de trous et un trou sur deux par colonne de la matrice rectangulaire de trous sont associés à une DEL où les trous de l'écran opaque forment une première et une deuxième matrices rectangulaires de trous imbriquées, les trous de la première matrice rectangulaire de trous sont associés à une DEL et les trous de la deuxième matrice rectangulaire de trous ne sont pas associés à une DEL, chaque trou associé à une DEL de la première matrice rectangulaire de trous étant positionnée à égale distance du centre des quatre trous de la deuxième matrice de trous de son voisinage le plus proche.

9. Dispositif selon la revendication 8, **caractérisé en ce que** les trous qui sont associés à une DEL ont un diamètre supérieur aux trous qui ne sont pas associés à une DEL.

10. Dispositif selon la revendication 6 ou 7, **caractérisé en ce que** les trous de l'écran opaque forment une matrice rectangulaire de trous, chaque trou étant associé à une DEL, le dispositif est adapté pour qu'une DEL sur deux pour chaque ligne et une DEL sur deux pour chaque colonne de la matrice de DEL soient allumées pour permettre une capture d'une première image intermédiaire et seules les DEL non allumées pour la première image intermédiaire sont allumées pour capturer une seconde image intermédiaire, une image d'empreinte étant formée à partir de la première et de la seconde images intermédiaires.

11. Dispositif selon l'une quelconque des revendications précédentes, **caractérisé en ce que** chaque photorécepteur du capteur correspondant à une position pouvant être frappée par un rayon lumineux issu de la partie corporelle ayant un angle d'incidence par rapport à la normale à la face supérieure inférieur à l'angle critique est masqué par une couche métallique opaque.

12. Dispositif selon l'une quelconque des revendications précédentes, **caractérisé en ce que** la première lame a une épaisseur trois à dix fois supérieure à une épaisseur de la deuxième lame.

13. Dispositif selon la revendication 4 **caractérisé en ce que**, la source lumineuse est intégrée sur la face inférieure de la première lame et **en ce que** chaque diode électroluminescente comprend dans une première couche une première électrode (70) transparente, dans une deuxième couche située immédiatement en dessous de la première, un empilement de couches formant une DEL (71) et dans une troisième couche commune à chaque DEL de la source lumineuse une couche de métal formant une seconde électrode (72), chaque couche étant réalisée par dépôt et gravure sur la face inférieure de la première lame, l'écran étant mis en œuvre par ladite couche de métal et comprenant les trous.

14. Equipement comprenant un dispositif selon l'une quelconque des revendications 1 à 13.

15. Procédé de détection de fraude lors d'une utilisation d'un dispositif de capture d'une empreinte d'une partie corporelle selon l'une quelconque des revendications 1 à 13, **caractérisé en ce que** le procédé comprend :
déterminer (81) si le capteur (124) est frappé par des rayons lumineux ayant un angle incident par rapport à la normale à la face supérieur (1200) supérieur à une valeur maximale pouvant être prise par un angle limite ($\theta_l$) dépendant des indices de réfraction de la première lame (120) et de la partie corporelle et au-delà duquel un rayon lumineux est totalement réfléchi par ladite face supérieure lorsque ledit rayon lumineux frappe la face supérieure au niveau d'un point de contact entre la face supérieure et un doigt ou, si dans au moins une zone prédéterminée du capteur, le capteur (124) est frappé exclusivement par des rayons lumineux ayant un angle incident par rapport à la normal à la face supérieure (1200) inférieur à une valeur minimale pouvant être prise par l' angle limite ; et, détecter (82) qu'il y a une fraude si le capteur (124) est frappé par des rayons lumineux ayant un angle incident par rapport à la normale à la face supérieur (1200) supérieur à ladite valeur maximale ou, si dans au moins une zone prédéterminée du capteur, le capteur (124) est frappé exclusivement par des rayons lumineux ayant un angle incident par rapport à la normal à la face supérieure (1200) inférieur à ladite valeur minimale.

**Patentansprüche**

1. Vorrichtung zum Erfassen eines Abdrucks eines Körperteils, die eine Vielzahl von optisch gekoppelten Elementen umfasst, mit :

   • einer ersten transparente Platte (120) mit einer Oberseite (1200), auf der das Körperteil, dessen Abdruck abgebildet werden soll, aufliegen kann;
   • eine Lichtquelle (121);
   • einen lichtundurchlässigen Schirm (122), der sich unterhalb des ersten transparenten Platten (120) befindet;

• eine zweite transparente Platte (123), die sich unterhalb des lichtundurchlässigen Schirms (122) befindet;
• einen Sensor (124) mit lichtempfindlichen Fotorezeptoren, der sich unterhalb der zweiten transparenten Platte (123) befindet und Informationen liefert, mit denen ein Bild des Abdrucks erzeugt werden kann;

wobei die Flächen der transparenten Platten, der undurchsichtige Schirm und der Sensor parallel zueinander sind, **dadurch gekennzeichnet, dass**:

die Lichtquelle Lichtstrahlen erzeugt, die mindestens die erste transparente Platte in Richtung der Oberseite (1200) durchdringen und einen Einfallswinkel in Bezug auf eine Normale zu dieser Oberseite (1200) aufweisen, der kleiner ist als ein kritischer Winkel, der durch die Brechungsindizes der ersten Platte und der Luft gegeben ist und oberhalb dessen ein Lichtstrahl bei Vorhandensein von Luft über der genannten oberen Fläche vollständig von der genannten oberen Fläche reflektiert wird ;
der lichtundurchlässigen Schirms (122) ein Netz von Löchern aufweist, so dass jeder auf den Sensor (124) gerichtete Lichtstrahl, der den lichtundurchlässigen Schirms (122) an einem Loch erreicht, den lichtundurchlässigen Schirms (122) durchdringt und den Sensor (124) erreicht ;
jeder lichtempfindliche Fotorezeptor des Sensors (124) an Positionen des Sensors (124) angeordnet ist, die von einem Lichtstrahl aus dem Körperteil nach Streuung im Körperteil mit einem Einfallswinkel zur genannten Normalen zwischen dem kritischen Winkel und dem Grenzwinkel getroffen werden können, wobei der Grenzwinkel durch die Brechungsindizes der ersten Platte und der Haut gegeben ist und oberhalb dieses Grenzwinkels ein Lichtstrahl bei Vorhandensein einer Hautwelle über der genannten Oberseite vollständig von der genannten Oberseite reflektiert wird;
Jeder Punkt des Körperteils, der mit der Oberseite (1200) in Kontakt steht, wird von mindestens einem Fotorezeptor des Sensors abgebildet.

2. Vorrichtung nach Anspruch 1, **dadurch gekennzeichnet, dass** mindestens ein Teil der Löcher, die sogenannten abbildenden Löcher, dazu dienen, den Körperteil abzubilden, und dass ein Abstand zwischen einem abbildenden Loch und dem oder den abbildenden Löchern, die seine nächsten Nachbarn sind, von Mitte zu Mitte genommen, größer ist als der Durchmesser eines Bildes des Körperteils, das durch ein Loch gesehen wird, wenn der Körperteil auf der Oberseite aufliegt.

3. Vorrichtung nach Anspruch 1 oder 2, **dadurch gekennzeichnet, dass** die Lichtquelle aus einer Vielzahl von lichtemittierenden Dioden, sogenannten LEDs, besteht, die LEDs so konfiguriert sind, dass jede lichterzeugende LED und die lichterzeugende(n) LED(s), die der LED am nächsten benachbart sind, auf dem Körperteil direkt von den LEDs beleuchtete Bereiche erzeugen, die um einen Abstand voneinander entfernt sind, der kleiner ist als ein vordefinierter Abstand, der für eine Eindringtiefe des Lichts in das Körperteil charakteristisch ist, die von einer Wellenlänge des von jeder LED erzeugten Lichts abhängt.

4. Vorrichtung nach Anspruch 3, **dadurch gekennzeichnet, dass** die Lichtquelle auf einer Unterseite des ersten Platte oder an einer Oberseite der zweiten Platte integriert ist und einen Lichtstrahl über dem lichtundurchlässigen Schirm erzeugt.

5. Vorrichtung nach Anspruch 3, **dadurch gekennzeichnet, dass** die Lichtquelle in die Oberfläche des Sensors integriert oder in den Sensor integriert ist und einen Lichtstrahl unterhalb des lichtundurchlässigen Schirms erzeugt, der den lichtundurchlässigen Schirm durch die Löcher in Richtung der Oberseite durchdringt, und jede LED der Lichtquelle gegenüber einem Loch des lichtundurchlässigen Schirms positioniert ist, wobei mindestens ein Teil der Löcher mit einer LED verbunden ist.

6. Vorrichtung nach Anspruch 5, **dadurch gekennzeichnet, dass** die LEDs in LED-Sätzen zusammengefasst sind, wobei jeder LED-Satz unabhängig von den anderen LED-Sätzen eingeschaltet werden soll, wobei mindestens einer der LED-Sätze eingeschaltet wird, um ein Zwischenbild zu erfassen, wobei jedes erfasste Zwischenbild zur Bildung des Bildes des Abdrucks verwendet wird.

7. Vorrichtung nach Anspruch 6, **dadurch gekennzeichnet, dass** jeder Fotorezeptor, der zur Erzeugung eines Bildes verwendet wird, außerhalb einer vordefinierten Nachbarschaft jeder leuchtenden LED liegt.

8. Vorrichtung nach Anspruch 5 oder 6, **dadurch gekennzeichnet, dass** die Löcher des lichtundurchlässigen Schirms eine rechteckige Lochmatrix bilden, jedes zweite Loch pro Zeile der rechteckigen Lochmatrix und jedes zweite Loch pro Spalte der rechteckigen Lochmatrix einer LED zugeordnet sind, wobei die Löcher des lichtundurchlässigen Schirms eine erste und eine zweite rechteckige Lochmatrix bilden, die ineinander verschachtelt sind, die Löcher der ersten rechteckigen Lochmatrix einer LED zugeordnet sind und die Löcher der zweiten rechteckigen Lochmatrix keiner LED zugeordnet sind, wobei jedes einer LED zugeordnete Loch der ersten rechteckigen Lochmatrix im gleichen Abstand von der Mitte der vier Löcher der zweiten Lochmatrix in ihrer nächsten Umgebung positioniert ist.

9. Vorrichtung nach Anspruch 8, **dadurch gekennzeichnet, dass** die Löcher, die mit einer LED verbunden sind, einen größeren Durchmesser haben als die Löcher, die nicht mit einer LED verbunden sind.

10. Vorrichtung nach Anspruch 6 oder 7, **dadurch gekennzeichnet, dass** die Löcher des lichtundurchlässigen Schirms eine rechteckige Matrix von Löchern bilden, wobei jedes Loch einer LED zugeordnet ist, die Vorrichtung so ausgelegt ist, dass jede zweite LED für jede Zeile und jede zweite LED für jede Spalte der LED-Matrix eingeschaltet ist, um eine Erfassung eines ersten Zwischenbildes zu ermöglichen, und nur die für das erste Zwischenbild nicht eingeschalteten LEDs eingeschaltet sind, um ein zweites Zwischenbild zu erfassen, wobei aus dem ersten und dem zweiten Zwischenbild ein Abdruckbild gebildet wird.

11. Vorrichtung nach einem der vorhergehenden Ansprüche, **dadurch gekennzeichnet, dass** jeder Fotorezeptor des Sensors, der einer Position entspricht, die von einem Lichtstrahl aus dem Körperteil getroffen werden kann, der einen Einfallswinkel in Bezug auf die Normale zur Oberseite hat, der kleiner als der kritische Winkel ist, durch eine lichtundurchlässige Metallschicht verdeckt ist.

12. Vorrichtung nach einem der vorhergehenden Ansprüche, **dadurch gekennzeichnet, dass** die erste Platte eine Dicke aufweist, die drei- bis zehnmal größer ist als eine Dicke der zweiten Platte.

13. Vorrichtung nach Anspruch 4, **dadurch gekennzeichnet, dass** die Lichtquelle auf der Unterseite der ersten Platte integriert ist und dass jede lichtemittierende Diode in einer ersten Schicht eine erste transparente Elektrode (70), in einer zweiten Schicht, die unmittelbar unter der ersten Schicht liegt, einen Stapel von Schichten, die eine LED (71) bilden, und in einer dritten Schicht, die jeder LED der Lichtquelle gemeinsam ist, eine Metallschicht, die eine zweite Elektrode (72) bildet, wobei jede Schicht durch Abscheiden und Ätzen auf der Unterseite des ersten Platte hergestellt wird, wobei die Abschirmung durch die Metallschicht implementiert wird und die Löcher umfasst.

14. Ausrüstung, die eine Vorrichtung nach einem der Ansprüche 1 bis 13 umfasst.

15. Verfahren zum Erkennen von Betrug bei der Verwendung einer Vorrichtung zum Erfassen eines Abdrucks eines Körperteils nach einem der Ansprüche 1 bis 13, **dadurch gekennzeichnet, dass** das Verfahren Folgendes umfasst: Bestimmen (81), ob der Sensor (124) von Lichtstrahlen getroffen wird, die einen Einfallswinkel relativ zur Normalen der Oberseite (1200) aufweisen, der größer ist als ein Maximalwert, der von einem Grenzwinkel ($\theta\_l$) angenommen werden kann, der von den Brechungsindizes des ersten Platte (120) und des Körperteils abhängt und über den hinaus ein Lichtstrahl von der Oberseite vollständig reflektiert wird, wenn der Lichtstrahl an einem Kontaktpunkt zwischen der Oberseite und einem Finger auf die Oberseite trifft, oder wenn in mindestens einem vorbestimmten Bereich des Sensors der Sensor (124) ausschließlich von Lichtstrahlen getroffen wird, die einen Einfallswinkel in Bezug auf die Normale zur Oberseite (1200) aufweisen, der kleiner ist als ein Minimalwert, der durch den Grenzwinkel eingenommen werden kann; und Erkennen (82), dass ein Betrug vorliegt, wenn der Sensor (124) von Lichtstrahlen getroffen wird, die einen Einfallswinkel relativ zur Normalen der Oberseite (1200) haben, der größer als der Maximalwert ist, oder wenn in mindestens einem vorbestimmten Bereich des Sensors der Sensor (124) ausschließlich von Lichtstrahlen getroffen wird, die einen Einfallswinkel relativ zur Normalen der Oberseite (1200) haben, der kleiner als der Minimalwert ist.

## Claims

1. Device for capturing a print of a body part comprising a plurality of optically coupled elements comprising:

   • a first transparent plate (120) comprising an upper face (1200) on which the part of the body bearing the print to be imaged can rest;
   • a light source (121);
   • a light-impermeable screen (122) located under the first transparent plate (120);
   • a second transparent plate (123) located under the opaque screen (122);
   • a sensor (124) comprising light-sensitive photoreceptors located under the second transparent plate (123) providing information enabling to generate an image of the print;

   the faces of the transparent plates, the opaque screen and the sensor being parallel, **characterised in that** :

   the light source generates light beams passing through at least the first transparent plate in the direction of the upper face (1200) having an incident angle with respect to a normal to the said upper face (1200) of a value less than a critical angle given by the refractive indices of the first plate and of the air and beyond which critical angle a light ray is totally reflected by said upper face in the presence of air above said upper face;

the opaque screen (122) comprises an array of holes such that each light ray directed towards the sensor (124) which reaches the opaque screen (122) at a hole passes through the opaque screen (122) and reaches the sensor (124); each light-sensitive photoreceptor of the sensor (124) is positioned at positions of the sensor (124) that can be hit by a light ray emanating from the body part after diffusion in the body part having an angle of incidence with respect to said normal lying between the critical angle and the limit angle, the limit angle being given by the refractive indices of the first plate and of the skin and beyond which limit angle a light ray is totally reflected by said upper face in the presence of a ridge of the skin above said upper face;

each point of the body part in contact with the upper face (1200) is imaged by at least one photoreceptor of said sensor.

2. Device according to claim 1, **characterised in that** at least some of the holes, known as imaging holes, serve to image the body part, and **in that** a distance between an imaging hole and the imaging hole or holes which are its nearest neighbours, taken from centre to centre, is greater than the diameter of an image of the body part seen through a hole when the body part is placed on the upper face.

3. Device according to claim 1 or 2, **characterised in that** the light source is composed of a plurality of light-emitting diodes, known as LEDs, the LEDs are configured in such a way that each LED producing light and the LED or LEDs producing light which are the closest to said LED generate, on the body part, parts illuminated directly by said LEDs at a distance less than a predefined distance characteristic of a depth of penetration of the light into the body part dependent on a wavelength of the light produced by each LED.

4. Device according to claim 3, **characterised in that** the light source is integrated on a lower face of the first plate or integrated on an upper face of the second plate and generates a light beam above the opaque screen.

5. Device according to claim 3, **characterized in that** the light source is integrated into the surface of the sensor or integrated into the sensor and generates a light beam below the opaque screen passing through the opaque screen via the holes towards the upper face and each LED of the light source is positioned opposite a hole in the opaque screen, at least part of the holes being associated with an LED.

6. Device according to claim 5, **characterised in that** the LEDs are grouped into sets of LEDs, each set of LEDs being arranged to be switched-on independently of the other sets of LEDs, at least one of the sets of LEDs being switched-on to acquire an intermediate image, each acquired intermediate image being used to form the image of the print.

7. Device according to claim 6, **characterised in that** each photoreceptor used to form an image is located outside a predefined vicinity of each switched-on LED.

8. Device according to claim 5 or 6, **characterised in that** the holes of the opaque screen form a rectangular array of holes, one out of two holes per row of the rectangular array of holes and one out of two holes per column of the rectangular array of holes are associated with one LED wherein the holes of the opaque screen form first and second nested rectangular arrays of holes, the holes of the first rectangular array of holes are associated with one LED and the holes of the second rectangular array of holes are not associated with any LED, each hole associated with one LED of the first rectangular array of holes being positioned equidistant from the centre of the four holes of the second array of holes in its nearest vicinity.

9. Device according to claim 8, **characterised in that** the holes which are associated with one LED have a larger diameter than the holes which are not associated with any LED.

10. Device according to claim 6 or 7, **characterised in that** the holes in the opaque screen form a rectangular array of holes, each hole being associated with one LED, the device is adapted so that one out of LEDs for each row and one out of two LEDs for each column of the array of LEDs are switched-on to enable a capture of a first intermediate image and only those LEDs not switched-on for the first intermediate image are switched-on to capture a second intermediate image, an image of the print being formed from the first and second intermediate images.

11. Device according to any one of the preceding claims, **characterised in that** each photoreceptor of the sensor corresponding to a position which can be hit by a light ray emanating from the body part having an angle of incidence with respect to the normal to the upper surface less than the critical angle is masked by an opaque metal layer.

12. Device according to any one of the preceding claims, **characterised in that** the first plate has a thickness three to ten times greater than a thickness of the second plate.

13. Device according to claim 4, **characterized in that** the light source is integrated on the underside of the first plate and **in that** each light-emitting diode comprises, in a first layer, a first transparent electrode (70), in a second layer located immediately below the first one, a stack of layers forming a LED (71) and, in a third layer common to each LED of the light source, a metal layer forming a second electrode (72), each layer being achieved by coating and etching on the underside of the first plate, the screen being implemented by said metal layer and comprising the holes.

14. Equipment comprising a device according to any one of claims 1 to 13.

15. Method for detecting fraud during use of a device for capturing a print of a body part according to any one of claims 1 to 13, **characterised in that** the method comprises:
determining (81) whether the sensor (124) is hit by light rays having an incident angle with respect to the normal to the upper face (1200) greater than a maximum value that can be taken by a limit angle $(\theta_l)$ depending on the refraction indices of the first plate (120) and the body part and beyond which a light ray is totally reflected by said upper face when said light ray hits the upper face at a point of contact between the upper face and a finger or, if in at least one predetermined area of the sensor, the sensor (124) is hit exclusively by light rays having an incident angle to the normal to the upper face (1200) lower than a minimum value which can be taken by the limit angle; and, detecting (82) that there is a fraud when the sensor (124) is hit by light rays having an incident angle with respect to the normal to the upper face (1200) greater than said maximum value or, if in at least one predetermined zone of the sensor, the sensor (124) is hit exclusively by light rays having an incident angle with respect to the normal to the upper face (1200) less than said minimum value.

Fig. 1

Fig. 2

Fig. 3

Fig. 4A

Fig. 4B

Fig. 4C

Fig. 4D

Fig. 4E

Fig. 5

Fig. 6

120

70

121A    71

72

Anode

Cathode

Fig. 7A

120

122A

70

71

72
(122)

121A

121B

124

123

125

Fig. 7B

81

82

Fig. 8

| 111<br>CPU | 112<br>RAM | 113<br>ROM | 11 |
| HDD<br>114 | COM<br>115 | | |

110

Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3200701 A
- FR 2757974
- US 20170017824 A

**Littérature non-brevet citée dans la description**

- **A. LEVIN** ; **R. FERGUS** ; **F. DURAND** ; **W. T. FREEMAN**. Image and Depth from a Conventional Camera with a Coded Aperture. *ACM Tr. On Graphics*, July 2007, vol. 26 (3)